# EUROPÄISCHE PATENTSCHRIFT

(11) **EP 0 495 038 B1**
(45) Veröffentlichungstag und Bekanntmachung des Hinweises auf die Patenterteilung: **03.05.1995**
(21) Anmeldenummer: 91913681.2
(22) Anmeldetag: 03.08.1991
(51) Int. Cl.: B60K 11/04, B62D 65/00

(54) **VORRICHTUNG ZUR MITTELBAREN HALTERUNG EINES AN STRUKTURTEILEN MONTIERBAREN AGGREGATES, INSBESONDERE EINES KÜHLERMODULS AM AUFBAU VON KRAFTFAHRZEUGEN**
DEVICE FOR THE INDIRECT SECURING OF A UNIT WHICH CAN BE FITTED ON STRUCTURAL COMPONENTS, ESPECIALLY A RADIATOR MODULE TO THE BODY OF MOTOR VEHICLES
DISPOSITIF DE RETENUE INDIRECTE D'UN ENSEMBLE MONTABLE SUR DES PARTIES STRUCTURALES, NOTAMMENT D'UN RADIATEUR SUR LA CARROSSERIE DE VEHICULES A MOTEUR

(30) Priorität: 14.08.1990 DE 4025661
(43) Veröffentlichungstag der Anmeldung: 22.07.1992
(73) Patentinhaber: Bayerische Motoren Werke Aktiengesellschaft, 80788 München (DE)
(72) Erfinder: BATANI, Hassan, D-8000 München 60 (DE); TEMMESFELD, Axel, D-8201 Raubling (DE); GREINDL, Eduard, D-8000 München 90 (DE)
(86) Internationale Anmeldenummer: EP9101468
(87) Internationale Veröffentlichungsnummer: WO9203305

(56) Entgegenhaltungen:
- EP-A- 0 226 914
- EP-A- 0 335 124
- DE-A- 3 906 616
- DE-B- 2 409 822
- GB-A- 2 173 250

## Beschreibung

Die Erfindung geht gemäß dem Oberbegriff des Patentanspruches 1 von einer aus der EP-A 331 540 bekannten Vorrichtung zur mittelbaren Halterung eines an Strukturteilen montierbaren Aggregates aus und betrifft ferner ein Montage-Verfahren unter Verwendung der erfindungsgemäßen Vorrichtung.

Diese bekannte Vorrichtung umfaßt zur Halterung eines Kühlermoduls an einem Fahrzeugaufbau dienende Verbindungselemente, die mit an Strukturteilen des Fahrzeugaufbaues zur Kühler-Montagerichtung im wesentlichen parallel angeordneten Führungen zusammenwirken um korrespondierende Rastmittel an beiden vorgenannten Einrichtungen zu einer einwandfreien Selbstverriegelung zu führen. Nachteilig bei dieser für eine Roboter-Montage tauglichen Vorrichtung sind die mit dem Kühlermodul fest verbundenen Verbindungselemente, so daß die Haltevorrichtung z.B. bei verschiedenen großen Kühlermodulen unterschiedlich angepaßt werden muß.

Weiter ist aus der EP-B 226 914 eine Kühlerbefestigung in einem Kraftfahrzeug bekannt, bei der den Kühler bzw. den Kühlermodul untergreifende Konsolen als Verbindungselemente der abstützenden Halterung gegen den Aufbau des Kraftfahrzeuges dienen. Diese Konsolen sind von der Art, daß sie gesondert vor dem Einbau des Kühlermoduls am Aufbau anzuordnen sind. Erst hierauf wird der Kühlermodul unter Zwischenschaltung elastischer Elemente auf den Konsolen zum Einbau im Aufbau angeordnet. Diese bekannte Vorrichtung zur mittelbaren Halterung eines Aggregates, insbesondere eines Kühlermoduls am Aufbau von Kraftfahrzeugen erfordert eine aufwendige Montage.

Weiter ist Diese mit Konsolen augebildete Vorrichtung zur Halterung eines Aggregates ist nicht für eine Fertigung geeignet, bei der Aggregate oder Aggregategruppen zur Verbindung mit dem Aufbau eines Kraftfahrzeuges dem Aufbau über Montagerahmen oder Montage-Aggregateträger automatisch zugeführt werden, wie dies z. B. in der DE-A-39 06 616 oder der EP-B-0 226 212 dargestellt ist.

Der Erfindung liegt die Aufgabe zugrunde, für eine Vorrichtung zur mittelbaren Halterung eines Aggregates an Strukturteilen mittels eines als Konsole gestalteten Verbindungselementes dieses auch für eine robotergeeignete Aggregate-Montage auszubilden.

Diese Aufgabe löst die Erfindung nach dem kennzeichnenden Teil des Patentanspruches 1.

Mit der Erfindung einer sich an einer strukturseitigen Lasche als Führung selbstverriegelnden Konsole als Verbindungselement ist in vorteilhafter Weise eine einfache, insbesondere robotergerechte Montage erzielt, wobei die erfindungsgemäße Vorrichtung keiner Beschränkung bezüglich einer Montagerichtung unterliegt. Für eine einfache Aggregate-Montage besonders vorteilhaft sind die an Strukturteilen angeordneten Laschen als Führungen der Konsolen zum Einfahren des Aggregates in dessen endgültige Einbaulage, wobei die Einbaulage durch eine insbesondere nach A2 gestaltete Selbstverriegelung der Verbindungselemente mit den Führungen gesichert ist. Die erfindungsgemäße Kombination aus Verbindungselement, Führung und Selbstverriegelung ist besonders vorteilhaft für eine mit Roboter durchgeführte Aggregate-Montage.

Die gemäß einem Teilmerkmal des A3 als einteiliges Kunststoff-Formteil gestaltete Konsole ist nach A4 mit Sperrnasen an eine Lasche beidseitig federnd beaufschlagenden Zungen ausgerüstet, wobei die Sperrnasen in eine Durchbrechung der Lasche eingreifen, und die Sperrnasen und die Durchbrechung jeweils zur Montage- und zu der aus dem Aggregate gewicht resultieren den Belastungsrichtung quer angeordnete Rastflächen aufweisen. Die Kombination der jede Lasche federnd beaufschlagenden Zungen mit den nach A2 angeordneten Rastflächen ergibt in vorteilhafter Weise eine mit zunehmender Belastung sich verstärkende Sperrwirkung der selbstverriegelnden Anordnung. Weiter ist die Konsole zur automatischen Montage vorzugsweise an einem Fahrzeug-Aufbau nach weiteren Teilmerkmalen des A3 zur eindeutigen Positionierung mit einer aufbauseitig orientierten Zentriereinrichtung ausgerüstet sowie mit einem Einführtrichter für die struktur- bzw. aufbauseitigen Laschen, die im weiteren von neben den Zungen angeordneten Führungsschlitzen in der Konsole erfaßt sind. Durch die Kombination der Zentriereinrichtung mit den eine zusätzliche Drehsicherung der Konsolen relativ zu den Laschen bewirkenden Führungsschlitzen ist ein Minimum an Mitteln zur einwandfreien Positionierung jeder Konsole am Fahrzeugaufbau erzielt. Schließlich ist mit der nach A4 getroffenen, mittigen Anordnung einer Sperrnase der einen Zunge zwischen zwei Sperrnasen der gegenüber angeordneten Zunge der in die Durchbrechung der Lasche von beiden Seiten eingreifenden Sperrnasen eine Aufteilung erzielt, die in vorteilhafter Weise eine gleichmäßige Krafteinleitung in die Konsole ergibt.

Die in Ausgestaltung der Erfindung in den Ansprüchen 1 mit 4 beschriebene Konsole dient vorzugsweise der Halterung eines Kühlermoduls am Aufbau eines Kraftfahrzeuges. Der im Hinblick auf die DE-A 37 16 099 abgegrenzte Anspruch 5 beschreibt ein Verfahren zum Einbau des Kühlermoduls unter Verwendung der selbstverriegelnden Kühlerkonsolen, die zusammen mit dem Kühlermodul geradlinig von unten in den Aufbau des Kraftfahrzeuges eingebracht bzw. über einen Montage-Aggregateträger eingefahren werden. Anspruch 6 beschreibt schließlich ein Verfahren mit mehreren auf dem Montage-Aggregateträger angeordneten Aggregaten, wobei der Kühlermodul in seiner Einbaulage mittels eines Verbindungsschlauches zu einem auf dem Montageträger angeordneten Antriebsaggregat positioniert wird, wie dies per se aus der DE-C 765 899 bekannt ist. Damit kommen gesonderte Mittel zur Fixierung der Einbaulage des Kühlermoduls beim Einbau in Fortfall.

Anhand eines bevorzugten, in der Zeichnung dargestellten Ausführungsbeispiels ist die Erfindung beschrieben.
Es zeigt:
- Fig. 1: eine Vorrichtung zur mittelbaren Halterung eines Kühlermoduls in der Ausgestaltung als selbstzentrierende Kühlerkonsole, und
- Fig. 2: die Verwendung der selbstzentrierenden Kühlerkonsole in einem Montage-Verfahren mit von der Unterseite her in den Aufbau eines Kraftfahrzeuges einzubringenden Kühlermoduls.

Eine Vorrichtung 1 zur mittelbaren Halterung eines an einem Aufbau 2 eines Kraftfahrzeuges 3 montierbaren Kühlermoduls 4 umfaßt eine Konsole 5 als Verbindungselement zum Aufbau 2. Weiter umfaßt die Vorrichtung 1 eine am Aufbau 2 frei nach unten gerichtete und zur Aggregate-Montagerichtung gemäß Pfeil "A" parallel angeordnete Führung, die als Lasche 6 mit einer Durchbrechung 7 gestaltet ist. Die als einteiliges Kunststoff-Formteil gestaltete Konsole 5 weist zu Aufnahme der Lasche 6 entsprechend beabstandete, elastisch an der Lasche 6 anliegende Zungen 8, 9 mit Sperrnasen 10, 11 auf, die selbsttätig in die Durchbrechung 7 der Lasche 6 einrasten. Sowohl die Sperrnasen 10, 11 als auch die den Sperrnasen zugewandte Begrenzung der Durchbrechung 7 der Lasche 6 weisen jeweils quer zur Montagerichtung gemäß Pfeil "A" angeordnete Rastflächen auf. Damit ist eine selbstverriegelnde Kühler-Konsole 5 geschaffen, bei der die Sperrwirkung der Sperrnasen 10, 11 sich mit zunehmender Belastung aus einer Fahrdynamisch bedingten Vertikalbewegung des Kühlermoduls 4 in einer zur Montagerichtung gemäß Pfeil "A" entgegensetzten Richtung sich selbsttätig verstärkt.

Aus der Zeichnung nicht ersichtlich sind in der Konsole 5 den Zungen 8, 9 beiderseits benachbart angeordnete, die Randbereiche 12, 13 der Lasche 6 umfassende Führungsschlitze. Den nicht gezeigten Führungsschlitzen sowie den Zungen 8, 9 ist in der Konsole 5 gemeinsam ein Einführtrichter 14 für die Lasche 6 zugeordnet. Der Einführtrichter 14 mündet in der Konsole 5 zwischen einer zur Anlage am Aufbau 2 dienenden Anschlagfläche 15 mit einer aufbauseitig orientierten Zentriereinrichtung 16 und einer zur Abstützung des Kühlermoduls 4 dienenden Stützfläche 17. Auf die Stützfläche 17 wirkt der Kühlermodul 4 über ein gummielastisches Puffer 18 ein.

Zur Erzielung einer gleichmäßigen Krafteinleitung in die Konsole ist vorgesehen, daß eine der Zungen 8, 9 der Konsole 5 entsprechend der lichten Weite der Durchbrechung 7 in der Lasche 6 beabstandet angeordnete Sperrnasen 10 aufweist, und daß eine weitere Sperrnase 11 der anderen Zunge 9 zwischen den Sperrnasen 10 in die Durchbrechung eingreifend angeordnet ist. Schließlich können beide Zungen 8, 9 über die Sperrnasen 10, 11 hinaus verlängerte Abschnitte 19 zum öffnenden Eingriff der Selbstverriegelung für eine Demontage des Kühlermoduls 4 aufweisen.

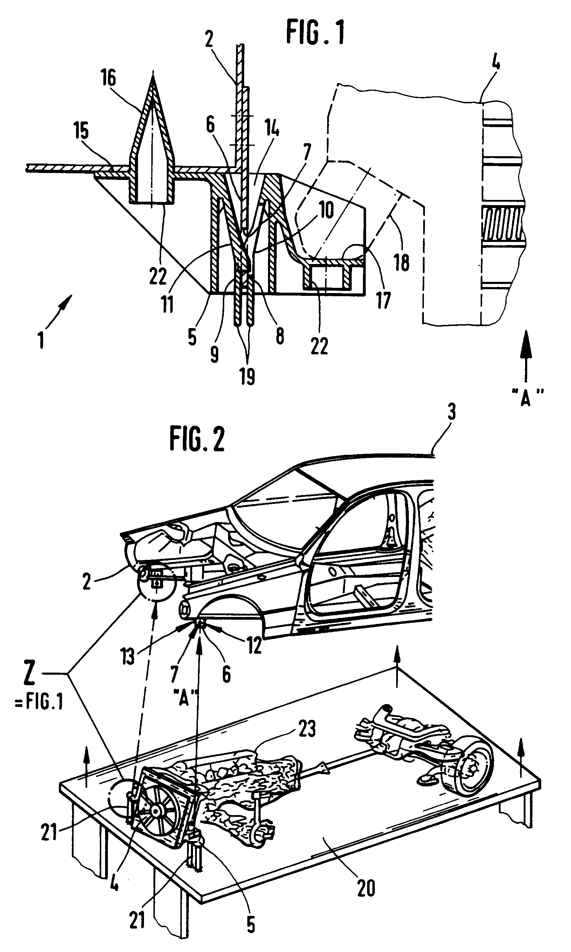

Ein in Fig. 2 dargestellter Montage-Aggregateträger 20 ist mit zwei Montageböcken 21 ausgerüstet, auf denen zwei den Kühlermodul 4 in seinen äußeren Bereichen untergreifende Konsolen 5 justiert werden. Zur Justierung jeder Konsole 5 weist diese an ihrer Unterseite Steckbuchsen 22 zur reibschlüssigen Verbindung mit entsprechenden Steckbolzen an jedem Montagebock 21 auf. Anschließend wird der Kühlermodul 4 über die Puffer 18 auf den Stützflächen 17 der Konsolen 5 aufgesetzt. Weiter ist auf dem Montage-Aggregateträger 20 dem Kühlermodul 4 benachbart angeordnet ein flüssigkeitsgekühltes Antriebsaggregat 23. An dieses wird der Kühlermodul 4 zumindest über einen Verbindungsschlauch angeschlossen. Über diesen Verbindungsschlauch ist der Kühlermodul 4 relativ zum Antriebsaggregat 23 positioniert und somit in seiner Einbaulage fixiert. Hierauf werden Kühlermodul 4 und Antriebsaggregat 23 mittels des Montage-Aggregateträgers 20 von unten in den Aufbau 2 geradlinig eingefahren. Hierbei werden im Endabschnitt des Einfahrens von unten die Konsolen 5 über die Zentriereinrichtungen 16 relativ zum Aufbau 2 positioniert und ferner die Konsolen 5 zur Halterung des Kühlermoduls 4 an den am Aufbau 2 nach unten frei abstehenden Laschen 6 über in deren Durchbrechungen 7 selbsttätig eingreifende Sperrnasen 10, 11 der Konsolen-Zungen 8, 9 verrastet.

Die in Fig. 1 beschriebene selbstverriegelnde Kühler-Konsole 5 bietet in Verbindung mit einem geradlinig einfahrbaren Kühlermodul 4 in einen Aufbau 2 eines Kraftfahrzeuges 3 eine einfache, vorzugsweise automatische Montage des Kühlermoduls 4. Geringe Montagekosten werden hierbei u. a. auch dadurch erzielt, daß an vorbereitenden Montagemaßnahmen lediglich das Justieren der beiden Konsolen 5 auf den Montageböcken 21 sowie das Anordnen des Kühlermoduls 4 auf den justierten Konsolen 5 anfallen, wobei die Einbaulage des Kühlermoduls 4 mittels eines Verbindungsschlauches des Kühlsystems des Antriebsaggregates 23 ohne zusätzliche Maßnahmen erzielt ist.

Im Rahmen der Erfindung ist es auch möglich, lediglich die Konsolen 5 von unten an den Laschen 6 des Aufbaus 2 selbstverriegelnd anzuordnen und im folgenden den Kühlermodul 4 beispielsweise von oben oder von seitlich oben im Aufbau auf den Konsolen 5 anzuordnen. Die erfindungsgemäße Vorrichtung ist jedoch nicht nur auf eine stehende Anordnung des Kühlermoduls beschränkt, sie ist ebenfalls für eine hängende Anordnung des Kühlermoduls geeignet. Während die vorgenannten Anordnungen im wesentlichen für vertikale Montagerichtungen des Kühlermoduls 4 gelten, umschließt die erfindungsgemäße Vorrichtung schließlich auch solche Anordnungen des Kühlermoduls 4 mit horizontalen Montagerichtungen.

## Patentansprüche

1. Vorrichtung zur mittelbaren Halterung eines an Strukturteilen montierbaren Aggregates, insbesondere eines Kühlermoduls am Aufbau von Kraftfahrzeugen,
- umfassend dem Aggregat (4) zugeordnete Verbindungselemente (5) und
- an Strukturteilen (2) zur Aggregate-Montagerichtung im wesentlichen parallel angeordneten Führungen (6), wobei
- Verbindungselemente (5) und Führungen (6) über korrespondierende, selbstverriegelnde Rastmittel in Halteposition des Aggregates zusammenwirken,
dadurch gekennzeichnet,
- daß als strukturseitige Führungen Laschen (6) mit im wesentlichen quer zur Montage- und Belastungsrichtung angeordneten Rastflächen (Durchbrechung 7) vorgesehen sind, und
- daß die als Konsolen (5) gestalteten Verbindungselemente zur Aufnahme der Laschen (6) jeweils entsprechend beabstandete, elastisch an der jeweiligen Lasche anliegende Zungen (8, 9) mit der selbstverriegelnden Verbindung mit den laschenseitigen Rastflächen dienenden Sperrnasen (10, 11) aufweisen.

2. Vorrichtung nach Anspruch 1, dadurch gekennzeichnet, daß jede Lasche (6) eine den Zungen (8, 9) der jeweiligen Konsole (5) angepaßte Durchbrechung (7) mit an einer Begrenzung angeordneter Rastfläche aufweist.

3. Vorrichtung nach Anspruch 1 und 2, dadurch gekennzeichnet,
- daß die Konsolen (5) als gesonderte, einteilige Kunststoff-Formteile gestaltet sind und
- den Zungen (8, 9) jeweils beiderseits benachbart angeordnete Randbereiche (12, 13) der jeweiligen Lasche (6) umfassende Führungsschlitze aufweisen, wobei
- den Führungsschlitzen und Zungen (8, 9) jeder Konsole (5) ein aufbau- bzw. laschenseitig orientierter Einführtrichter (14) zugeordnet ist, der
- zwischen einer zur Anlage an einem Strukturteil (Aufbau 2) dienenden Anschlagfläche (15) mit einer strukturteilorientierten Zentriereinrichtung (16) und einer zur Abstützung des Aggregates (Kühlermodul 4) dienenden Stützfläche (17) der Konsole (5) mündet.

4. Vorrichtung nach den Ansprüchen 1 bis 3, dadurch gekennzeichnet,
- daß eine der Zungen (8, 9) der Konsole (5) entsprechend der lichten Weite der Durchbrechung (7) in der Lasche (6) beabstandet angeordnete Sperrnasen (10) aufweist und
- daß eine weitere Sperrnase (11) der anderen Zunge (9) zwischen diesen Sperrnasen (10) angeordnet ist und
- daß gegebenenfalls beide Zungen (8, 9) über die Sperrnasen (10, 11) hinaus verlängerte Abschnitte (19) zum öffnenden Eingriff der Selbstverriegelung aufweisen.

5. Verfahren zur Montage eines Aggregates am Aufbau eines Kraftfahrzeuges mit einer Vorrichtung nach den Ansprüchen 1 bis 4,
- bei dem das Aggregat (Kühlermodul 4) in den Aufbau (2) von unten eingebracht und
- durch Selbstverriegelung korrespondierender Rastmittel am Aufbau (2) gehalten wird,
dadurch gekennzeichnet,
- daß zwei einen als Aggregat vorgesehenen Kühlermodul (4) untergreifende Konsolen (5) auf einem Montage-Aggregateträger (20) justiert angeordnet werden und
- daß der auf den Stützflächen (17) der Konsolen (5) in Einbaulage positionierte Kühlermodul (4) mittels des Montageaggregateträgers (20) geradlinig in den Aufbau (2) eingebracht wird, wobei
- im Endabschnitt des Einbringens von unten die Konsolen (5) über Zentriereinrichtungen (16) relativ zum Aufbau (2) positioniert und
- die Konsolen (5) zur Halterung des Kühlermoduls (4) an dem am Aufbau (2) nach unten frei abstehenden Laschen (6) über in deren Durchbrechungen (7) selbsttätig eingreifende Sperrnasen (10, 11) der Konsolen-Zungen (8, 9) verrastet werden.

6. Verfahren nach Anspruch 5,
- wobei auf dem Montage-Aggregateträger (20) der Kühlermodul (4) und ein flüssigkeitsgekühltes Antriebsaggregat (23) angeordnet werden,
dadurch gekennzeichnet,
- daß der auf den Konsolen (5) lose gelagerte Kühlermodul (4) mittels eines Verbindungsschlauches relativ zum Antriebsaggregat (23) in seiner Einbaulage positioniert gehalten wird.

## Claims

1. A device for indirectly securing a unit for fitting to structural parts, more especially a radiator module for fitting to a vehicle body,
- comprising connecting elements (5) associated with the unit (4) and
- guides (6) disposed on structural parts (2) substantially parallel to the direction for fitting the unit, wherein
- the connecting elements (5) and guides (6) co- operate via corresponding self-locking catch means in the position for securing the unit,
characterised in that
- the guides on the side of the structure are lugs (6) comprising catch surfaces (aperture 7) disposed substantially transversely to the direction of assembly and load, and
- the connecting elements, in the form of brackets (5), for receiving the lugs (6) have correspondingly spaced tongues (8, 9) resiliently adjacent the respective lug comprising the self-locking connection to locking projections (10, 11) serving as catch surfaces on the lug side.

2. A device according to claim 1, characterised in that each lug (6) has an aperture (7) matching the tongues (8, 9) on the respective bracket (5) and with a catch surface situated at a boundary.

3. A device according to claims 1 and 2, characterised in that
- the brackets (5) are separate one-part plastics moulded parts and
- comprise edge regions (12, 13) of the guide slots surrounding the respective lug (6), the edge regions being adjacent the tongues (8, 9) on each side, and
- an insertion funnel (14) pointing towards the body or lug is associated with the guide slots and tongues (8, 9) on each bracket (5), and
- opens between an abutment surface (15) for placing against a structural part (body 2) and having a centring device (16) pointing towards the structural part, and a supporting surface (17) of the bracket (5) for supporting the unit (the radiator module 4).

4. A device according to claims 1 to 3, characterised in that
- one of the tongues (8, 9) on the bracket (5) has locking projections (10) spaced so as to correspond to the internal width of the aperture (7) in the lug (6), and
- an additional locking projection (11) on the other tongue (9) is disposed between the locking projections (10), and
- optionally both tongues (8, 9) have portions (19) extending beyond the locking projections (10, 11) for engaging and opening the self-locking means.

5. A method of fitting a unit on to a vehicle body, using a device according to claims 1 to 4,
- wherein the unit (the radiator module 4) is inserted into the body (2) from beneath and
- is secured to the body (2) by self-locking of corresponding catch means,
characterised in that
- two brackets (5) extending under a unit in the form of a radiator module (4) are disposed and adjusted on an assembly-unit holder (20), and
- the radiator module (4), positioned in the installation position on the supporting surfaces (17) of the brackets (5), is inserted in a straight line into the body (2) by the assembly unit holder (20), and
- during the final stage of insertion from beneath, the brackets (5) are positioned relative to the body (2) by centring means (16) and
- the brackets (5) for securing the radiator module (4) to the lugs (6) projecting downwards from the body (2) are locked by projections (10, 11) on the tongues (8, 9) which automatically engage in the apertures (7).

6. A method according to claim 5,
- wherein the radiator module (4) and a liquid- cooled drive unit (23) are disposed on the assembly- unit holder (20),
characterised in that
- the radiator module (4), loosely placed on the brackets (5), is held by a flexible connecting tube or pipe in the position for installation relative to the drive unit (23).

## Revendications

1. Dispositif de maintien indirect d'un ensemble sur des éléments d'une structure, notamment d'un module de refroidissement dans la carrosserie d'une automobile, dans lequel :
- des éléments de liaison (5), associés à l'ensemble, sont disposés à sa périphérie,
- des éléments de la structure (2) portent des guidages (6) sensiblement parallèles à la direction de montage de l'ensemble,
- les éléments de liaison (5) et les guidages (6) coopèrent par l'intermédiaire de moyens homologues à autoverrouillage bloquant l'ensemble en position de maintien, dispositif caractérisé en ce que :
- les guidages portés par les éléments de structure sont des pattes (6) comportant des portées d'arrêt (ouverture 7) sensiblement perpendiculaires à la direction de montage et d'action de la charge de l'ensemble, et
- les éléments de liaison (5) sont des consoles (5) qui, pour recevoir les pattes (6), comportent chacune des languettes (8, 9) convenablement espacées, en appui élastique sur la patte correspondante et portant des dents d'arrêt (10, 11) assurant une liaison à autoverrouillage avec les portées d'arrêt existant sur les pattes (6).

2. Dispositif selon la revendication 1, caractérisé en ce que chaque patte (6) est percée d'une ouverture (7) adaptée aux languettes (8, 9) de la console (5) correspondante et comportant une portée d'arrêt vers son extrémité.

3. Dispositif selon les revendications 1 et 2, caractérisé en ce que :
- chaque console (5) est une pièce spéciale, en matière plastique moulée,
- les bords (12, 13) de chaque patte (6), disposés des deux côtés près des languettes (8, 9), présentent des fentes de guidage étendues,
- un entonnoir d'engagement (14) ouvert vers la carrosserie c'est-à-dire la patte, est associé aux fentes de guidage et aux languettes (8, 9) de chaque console 5,
- l'entonnoir (14) débouche entre d'une part une surface de butée (15) servant d'appui sur un élément de structure (carrosserie 2) et comportant un dispositif de centrage (16) dirigé vers la structure, et d'autre part une surface (17) de la console (5) servant d'appui à l'ensemble (module de refroidissement 4).

4. Dispositif selon les revendications 1 à 3, caractérisé en ce que : :
- une des languettes (8, 9) de la console (5) comporte des dents d'arrêt (10) d'espacement correspondant au passage libre de l'ouverture (7) de la patte (6),
- une autre dent d'arrêt (11) portée par l'autre languette (9) est intercalée entre les dents (10) précédentes,
- éventuellement, les deux languettes (8, 9) comportent, au-delà des dents d'arrêt (10, 11), des prolongements vers l'extérieur (19) permettant d'agir sur l'autoverrouillage pour l'ouvrir.

5. Procédé de montage d'un ensemble dans la carrosserie d'une automobile, utilisant le dispositif des revendications 1 à 4, dans lequel :
- l'ensemble (module de refroidissement 4) est introduit dans la carrosserie (2) par dessous,
- l'ensemble est maintenu dans la carrosserie par autoverrouillage des organes d'arrêt homologues,
procédé caractérisé en ce que :
- deux consoles (5) en prise par dessous avec l'ensemble constitué par un module de refroidissement (4) sont positionnées avec précision sur un support de montage d'ensemble (20),
- le module de refroidissement (4), placé en position d'intégration sur les surfaces porteuses (17) des consoles (5), est introduit dans la carrosserie (2) par un déplacement rectiligne du support de montage d'ensemble (20),
- à la fin de ce mouvement d'introduction par le bas, les consoles sont positionnées par rapport à la carrosserie au moyen de dispositifs de centrage (16),
- les consoles (5), pour assurer le maintien du module de refroidissement (4) dans la carrosserie (2) présentent des pattes dépassant vers le bas et percées d'ouvertures (7) dans lesquelles viennent automatiquement en prise les dents d'arrêt (10, 11) des languettes (8, 9) des consoles.

6. Procédé selon la revendication 5, appliqué à un support de montage d'ensemble (20) portant le module de refroidissement (4) ainsi qu'un groupe propulseur (23) refroidi à l'eau, caractérisé en ce que le module de refroidissement (4) placé libre sur les consoles (5) est maintenu dans sa position d'incorporation, par rapport au groupe propulseur (23), par un tuyau de liaison.
